# EUROPÄISCHE PATENTANMELDUNG

(11) **EP 1 898 430 A1**
(43) Veröffentlichungstag der Anmeldung: **12.03.2008**
(21) Anmeldenummer: 06291412.2
(22) Anmeldetag: 06.09.2006
(51) Int. Cl.: H01B 7/06, G02B 6/44, H02G 11/00

(54) **Anordnung zum Anschliessen von ortsveränderlichen Verbrauchern an eine Speisequelle**

(71) Anmelder: Nexans, 75008 Paris (FR)
(72) Erfinder: Grögl, Ferdinand, 90403 Nümberg (DE); Mann, Thomas, 91367 Weissonohe (DE)
(74) Vertreter: Döring, Roger

(57) **Zusammenfassung**

Es wird eine Anordnung zum Anschließen von ortsveränderlichen Verbrauchern an eine Speisequelle angegeben, welche mindestens zwei Leitungen und mindestens ein von einer Isolierung umgebenes, langgestrecktes und zugfestes Element (4) aufweist, die gemeinsam durch mindestens ein Halteelement zu einer Einheit zusammengefaßt sind. In der Einheit sind mindestens zwei Rohre (6) angeordnet, die zur Aufnahme von nach Fertigstellung der Einheit einbringbaren Leitungen dienen.

## Beschreibung

Die Erfindung bezieht sich auf eine Anordnung zum Anschließen von ortsveränderlichen Verbrauchern an eine Speisequelle, welche mindestens zwei Leitungen und mindestens ein von einer Isolierung umgebenes, langgestrecktes und zugfestes Element aufweist, die gemeinsam durch mindestens ein Halteelement zu einer Einheit zusammengefaßt sind (DE-U-200 12827).

"Ortsveränderliche Verbraucher" sind beispielsweise industrielle Automaten, Krananlagen, Flugsteigwege, Aufzüge, Stapler in Hochregalen oder Roboter, die mit einer elektrischen Spannungs- und/oder Signalquelle und/oder einer optischen Signalquelle als Speisequelle verbunden werden sollen. Die für derartige Verbraucher eingesetzten Anordnungen mit elektrischen und/oder optischen Leitungen sind in bekannter Technik in Schleppleitungen zusammengefaßt. Solche in Schleppketten angeordneten Schleppleitungen sind seit Jahren auf dem Markt erhältlich und vielfältig im Einsatz. Sie können horizontal und vertikal bewegt werden. Dabei sind horizontal Entfernungen von bis zu 100 m überbrückbar, während vertikal beispielsweise Höhenunterschiede von etwa 20 m überbrückt werden können. Bei der Bewegung der Schleppketten werden die Leitungen in dauerndem Wechsel gebogen und gestreckt. Sie werden dadurch ständig mechanisch beansprucht.

Aus dem eingangs erwähnten DE-U-200 12 827 geht eine Anordnung hervor, durch welche die mechanische Belastung der elektrischen Leitungen beim Betrieb einer Schleppkette vermindert wird. Diese Anordnung hat zwei zugfeste Seile und ein zwischen denselben angeordnetes Übertragungselement, in dem mehrere elektrische Leitungen angeordnet sind und welches von einem elektrischen Schirm und einer über demselben liegenden Schutzhülle aus einem Isoliermaterial mit guter Gleitfähigkeit umgeben ist. Die Seile sind von einer Kunststoffschicht umgeben. Die Drähte des einen Seils sind gegenüber den Drähten des anderen Seils mit entgegengesetzter Drallrichtung verseilt und das Übertragungselement sowie die beiden Seile sind in einer Ebene liegend in einen gemeinsamen, flachen Isolierkörper eingebettet, der im Extrusionsverfahren erzeugt ist. Diese bekannte Anordnung hat sich in der Praxis bewährt. Das Übertragungselement erfordert jedoch eine relativ aufwendige Fertigung.

Der Erfindung liegt die Aufgabe zugrunde, die eingangs geschilderte Anordnung einfacher zu gestalten, bei gleichzeitig vereinfachter Fertigung.

Diese Aufgabe wird gemäß der Erfindung dadurch gelöst, daß in der Einheit mindestens zwei Rohre angeordnet sind, die zur Aufnahme von nach Fertigstellung der Einheit einbringbaren Leitungen dienen.

Diese Anordnung kann zunächst in einfacher Fertigung mit herkömmlichen Mitteln, unabhängig von den in der Einheit zu verwendenden bzw. benötigten elektrischen Leitungen, "endlos" hergestellt werden. Das kann mit Vorteil auch im automatischen Verfahren erfolgen, weil zunächst für den Aufbau der Einheit nur mechanische Gesichtspunkte zu berücksichtigen sind. Die für eine Schleppleitung einer Schleppkette vorgesehenen elektrischen und/oder optischen Leitungen können ebenfalls auf einfache Weise in die Rohre einer entsprechenden, von der endlosen Länge abgetrennten Länge der Einheit eingeblasen oder eingezogen werden. Dabei können problemlos unterschiedliche Leitungen oder auch nur Adern eingesetzt werden, die entsprechend einfach aufgebaut sind. Eine möglicherweise erforderliche Abschirmung der Leitungen kann auf einfache Weise durch den Einsatz entsprechender, metallischer Rohre realisiert werden.

Ausführungsbeispiele des Erfindungsgegenstandes sind in den Zeichnungen dargestellt.

Es zeigen:
Fig. 1 und 2 zwei unterschiedliche Positionen einer Schleppkette an einem Einsatzort.
Fig. 3 und 4 eine Anordnung nach der Erfindung in zwei unterschiedlichen Ausführungsformen.
Fig. 5 einen Schnitt durch Fig. 4 längs der Linie V-V.
Fig. 6 eine gegenüber den Fig. 3 und 4 abgewandelte Ausführungsform der Anordnung.
Fig. 7 bis 10 Einzelheiten der Anordnung in vergrößerten Darstellungen.

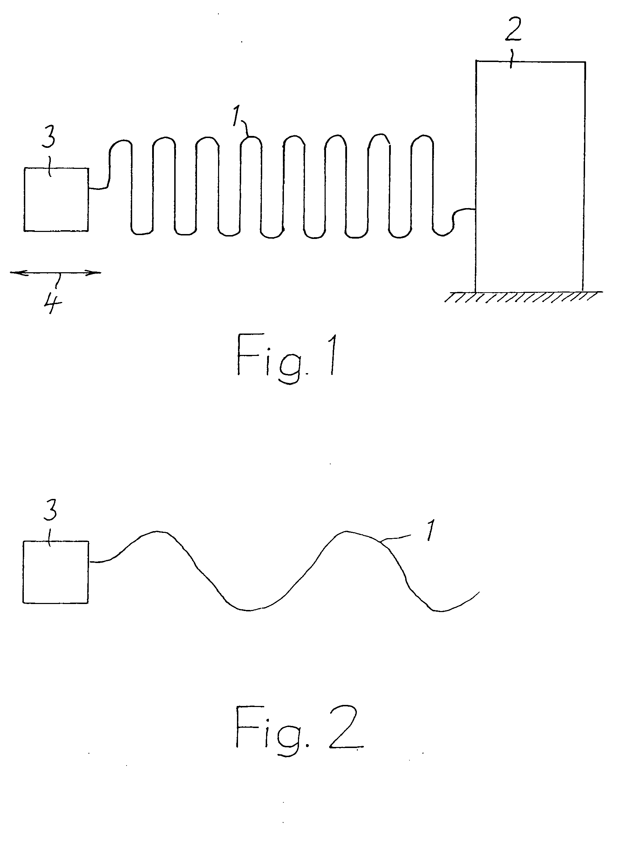

In Fig. 1 ist schematisch eine mit elektrischen und/oder optischen Leitungen ausgerüstete, in einer Schleppkette angeordnete Schleppleitung 1 dargestellt, die in Schlaufen zwischen einer ortsfesten Speisequelle 2 und einem Verbraucher 3 verläuft. Der Verbraucher 3 ist auf einem vorgegebenen Weg in Richtung des Doppelpfeils 4 hin und her bewegbar. Bei der Bewegung des Verbrauchers 3 werden die Schlaufen der Schleppleitung 1 in der einen Richtung mit vermindertem Biegeradius dichter zusammengedrückt, während sie in der anderen Richtung - so wie in Fig. 2 angedeutet - mit vergrößertem Biegeradius auseinander gehen. Bei maximaler Entfernung zwischen Speisequelle 2 und Verbraucher 3 kann die Schleppleitung 1 nahezu gestreckt sein. In der Speisequelle 2 ist die Leitung 1 zugfest montiert und mit einer Spannungsquelle einerseits sowie einer Signalquelle andererseits verbunden. Sie ist auch am Verbraucher 3 zugfest angebracht.

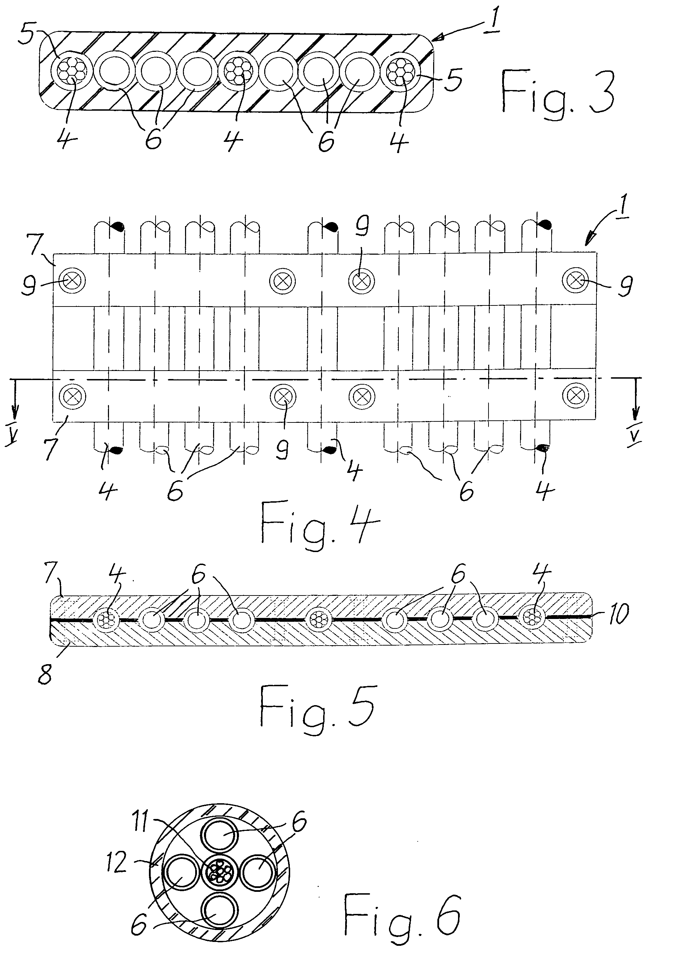

Die Schleppleitung 1 weist gemäß Fig. 3 beispielsweise drei in einer Ebene liegende zugfeste Elemente 4 auf, bei denen es sich mit Vorzug um Stahlseile handelt. Statt der Worte "zugfestes Element" wird im folgenden der Einfachheit halber das Wort "Seil" verwendet. Für die Seile 4 können auch andere Materialien als Stahl eingesetzt werden, beispielsweise Aramid. Bei der in Fig. 3 dargestellten Ausführungsform der Schleppleitung 1 sollen mindestens zwei Seile 4 vorhanden sein, und zwar an beiden seitlichen Enden. Es können auch mehr als drei Seile 4 eingesetzt werden, insbesondere bei einer breiteren Schleppleitung 1.

Die Seile 4 sind vorzugsweise jeweils von einer Hülle 5 aus Isoliermaterial umgeben, die beispielsweise aus Polyurethan oder Polyamid besteht. Zwischen den Seilen 4 sind Rohre 6 angebracht, die nebeneinander liegend, zusammen mit den Seilen 4 in einer Ebene angeordnet sind. Im dargestellten Ausführungsbeispiel sind jeweils drei Rohre 6 zwischen zwei Seilen 4 vorhanden. Die Rohre 6 können alle den gleichen Außendurchmesser haben, der vorzugsweise gleich dem Außendurchmesser der umhüllten Seile 4 ist. Sie können aber auch unterschiedliche Außendurchmesser und auch unterschiedliche lichte Weiten aufweisen.

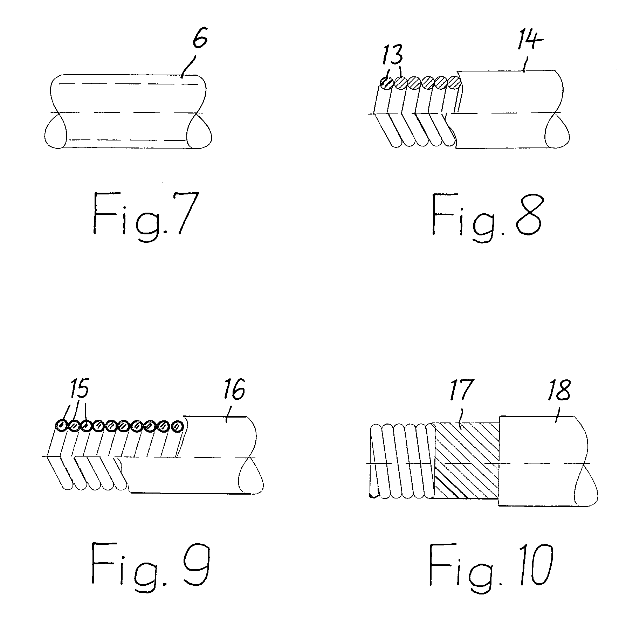

Der Aufbau der Rohre 6 wird weiter unten in Ausführungsbeispielen anhand der Fig. 7 bis 10 beschrieben. Seile 4 und Rohre 6 sind bei der Anordnung nach Fig. 3 auf ihrer ganzen Länge in einen Mantel 7 aus Kunststoff eingebettet, der vorzugsweise in einem kontinuierlich arbeitenden Extrusionsverfahren aufgebracht wird. Der Mantel 7 besteht vorzugsweise aus einem thermoplastischen Elastomer, wie Polyurethan. Er kann zusätzlich mit einer dünnen Schicht aus abriebfestem und/oder chemikalienbeständigem Material versehen sein, deren Dicke im Nano-Bereich liegt.

Ein ähnlicher Aufbau der Schleppleitung 1 wie in Fig. 3 ist in den Fig. 4 und 5 gezeigt. Auch hier liegen die Seile 4 und die Rohre 6 in einer Ebene. Sie sind jedoch durch Zwischenräume voneinander getrennt und in axialen Abständen durch quer zur Achsrichtung der Rohre 6 verlaufende Querstreben 7 und 8 zusammengehalten. Die Querstreben 7 und 8 sind zumindest an ihren seitlichen Enden durch lösbare oder unlösbare Verbindungselemente 9, wie beispielsweise Niete, fest mit einander verbunden. Niete 9 können aber auch zwischen den Rohren 6 vorhanden sein, so wie es in den Fig. 4 und 5 dargestellt ist. Zwischen den Querstreben 7 und 8 kann jeweils eine Dichtung 10 angebracht sein. Die Querstreben 7 und 8 können mit Vorzug aus einem abriebfesten Kunststoff, wie beispielsweise glasfaserverstärktes Polyurethan, oder auch aus Leichtmetall, wie beispielsweise einer Aluminiumlegierung, bestehen. Zur Verbesserung des Gleitverhaltens der in dieser Flachform hergestellten Schleppleitung 1 in einer Schleppkette können an den Querstreben 7 und 8 zusätzlich Kugellager angebracht werden. Eine solche Schleppleitung 1 kann grundsätzlich auch ohne zusätzliche Schleppkette direkt in einer entsprechenden Führung aus Kunststoff oder Metall eingesetzt werden. Das gilt insbesondere für kürzere Strecken zwischen den Verbrauchern und den Speisequellen.

Die Schleppleitung 1 kann auch gemäß Fig. 6 aufgebaut sein, bei welcher die Rohre 6 um ein zentrales Seil 11 herum angeordnet sind. Der Verbund aus Rohren 6 und Seil 11 wird durch eine Umhüllung 12 zusammengehalten, die analog zu Fig. 3 extrudiert sein kann. Sie kann aber auch aus Bändern oder Profilen bestehen, die in axialen Abständen um die Rohre 6 herumgewunden werden bzw. sind.

Die Rohre 6 können gemäß Fig. 7 insgesamt aus Kunststoff bestehen, und zwar beispielsweise aus Polyurethan oder Polyamid. Entsprechend Fig. 8 ist es insbesondere zur Verbesserung der Biegbarkeit und der mechanischen Belastbarkeit der Rohre 6 auch möglich, dieselben aus einem Federstahldraht 13 aufzubauen, der in dicht liegenden, einen durchgehenden Hohlraum umschließenden Windungen zu einem Rohr gewickelt ist. Über dem Federstahldraht 13 ist eine Hülle 14 aus Kunststoff angebracht, die wieder aus Polyurethan oder Polyamid bestehen kann. Statt eines Drahtes aus Federstahl kann gemäß Fig. 9 auch ein mit Kupfer oder Aluminium beschichteter Stahldraht 15 verwendet werden. Der beschichtete Stahldraht 15 ist ebenso wie der Federstahldraht 13 nach Fig. 8 in dicht liegenden Windungen gewickelt und von einer Hülle 16 aus Kunststoff (Polyurethan oder Polyamid) umgeben.

Bei der Ausführungsform der Rohre 6 nach den Fig. 8 und 9 bewirken der Federstahldraht 13 und insbesondere der beschichtete Stahldraht 15, die in Windungen dicht aneinander liegen, gleichzeitig eine elektrische Abschirmung einer in dem entsprechenden metallischen Rohr befindlichen Leitung. Zur Verbesserung der Schirmwirkung kann über dem gewickelten Rohr nach den Fig. 8 und 9 zusätzlich ein elektrisch wirksamer Schirm 17 aufgebracht sein, der aus einer Metallfolie (Kupfer oder Aluminium) oder aus einer kunststoffkaschierten Metallfolie oder aus einem mit Aluminium, Kupfer und Nickel metallisierten Vlies bestehen kann. Die Metallisierung wird durch Bedampfen auf ein Vliesmaterial aus Kunststoff aufgebracht. Über dem Schirm 17 ist wieder eine Hülle 18 aus Kunststoff angebracht, die aus Polyurethan oder Polyamid bestehen kann.

Nach Fertigstellung einer Anordnung nach der Erfindung, so wie sie beispielsweise in den Fig. 3 bis 6 dargestellt ist, können in die Rohre 6 elektrische Leitungen beliebigen Aufbaus eingeblasen oder eingezogen werden. Dabei kann es sich um elektrische und optische Fernmeldeleitungen und Datenleitungen oder um Starkstromleitungen oder auch um kombinierte Leitungen handeln. Damit sich eine Schleppleitung 1 ergibt, muß in mindestens eines der Rohre 6 eine entsprechende Leitung eingebracht werden. Es kann in jeder so hergestellten Schleppleitung 1 mindestens ein Rohr 6 für eine eventuell benötigte Reserveleitung frei gelassen werden. Mindestens eines der Rohre 6 kann auch zum direkten Druckluft-Anschluß verwendet werden.

## Patentansprüche

1. Anordnung zum Anschluß von ortsveränderlichen Verbrauchern an eine Speisequelle, welche mindestens zwei Leitungen und mindestens ein von einer Isolierung umgebenes, langgestrecktes und zugfestes Element aufweist, die gemeinsam durch mindestens ein Halteelement zu einer Einheit zusammengefaßt sind, **dadurch gekennzeichnet, daß** in der Einheit mindestens zwei Rohre (6) angeordnet sind, die zur Aufnahme von nach Fertigstellung der Einheit einbringbaren Leitungen dienen.

2. Anordnung nach Anspruch 1, **dadurch gekennzeichnet, daß** die Rohre (6) und das zugfeste Element (4) über ihre ganze axiale Länge in eine Hülle (5) aus Isoliermaterial eingebettet sind.

3. Anordnung nach Anspruch 1, **dadurch gekennzeichnet, daß** die Rohre (6) und das zugfeste Element (4) durch in axialen Abständen angebrachte, quer zur Achsrichtung der Rohre (6) verlaufende Querstreben (7,8) aus Isoliermaterial zusammengehalten sind.

4. Anordnung nach einem der Ansprüche 1 bis 3, **dadurch gekennzeichnet, daß** die Rohre (6) aus Kunststoff bestehen.

5. Anordnung nach einem der Ansprüche 1 bis 3, **dadurch gekennzeichnet, daß** die Rohre (6) aus einem Federstahldraht (13) bestehen, der in dicht aneinander liegenden, einen durchgehenden Hohlraum umschließenden Windungen gewickelt ist.

6. Anordnung nach einem der Ansprüche 1 bis 3, **dadurch gekennzeichnet, daß** die Rohre (6) aus einem mit Kupfer oder Aluminium beschichteten Stahldraht (15) bestehen, der in dicht aneinander liegenden, einen durchgehenden Hohlraum umschließenden Windungen gewickelt ist.

7. Anordnung nach Anspruch 5 oder 6, **dadurch gekennzeichnet, daß** über den metallischen Rohren (6) eine Hülle (14,16) aus Kunststoff angeordnet ist.

8. Anordnung nach Anspruch 5 oder 6, **dadurch gekennzeichnet, daß** über den metallischen Rohren (6) ein elektrisch wirksamer Schirm (17) angebracht ist.

9. Anordnung nach Anspruch 8, **dadurch gekennzeichnet, daß** über dem Schirm (17) eine Hülle (18) aus Kunststoff angeordnet ist.

## Geänderte Patentansprüche

### Geänderte Patentansprüche gemäss Regel 137(2) EPÜ.

**1.** Anordnung zum Anschluß von ortsveränderlichen Verbrauchern (3) an eine Speisequelle (2), welche mindestens zwei Leitungen und mindestens ein von einer Isolierung umgebenes, langgestrecktes und zugfestes Element (4) aufweist, die gemeinsam durch mindestens ein Halteelement zu einer Einheit zusammengefaßt sind, **dadurch gekennzeichnet,**
- **daß** in der Einheit in an sich bekannter Weise mindestens zwei Rohre (6) angeordnet sind, die zur Aufnahme von nach Fertigstellung der Einheit einbringbaren Leitungen dienen, und
- **daß** die Rohre (6) und das zugfeste Element (4) durch in axialen Abständen angebrachte, quer zur Achsrichtung der Rohre (6) verlaufende Querstreben (7,8) aus Isoliermaterial zusammengehalten sind.

**2.** Anordnung nach Anspruch 1, **dadurch gekennzeichnet, daß** die Rohre (6) aus Kunststoff bestehen.

**3.** Anordnung nach Anspruch 1, **dadurch gekennzeichnet, daß** die Rohre (6) aus einem Federstahldraht (13) bestehen, der in dicht aneinander liegenden, einen durchgehenden Hohlraum umschließenden Windungen gewickelt ist.

**4.** Anordnung nach Anspruch 1, **dadurch gekennzeichnet, daß** die Rohre (6) aus einem mit Kupfer oder Aluminium beschichteten Stahldraht (15) bestehen, der in dicht aneinander liegenden, einen durchgehenden Hohlraum umschließenden Windungen gewickelt ist.

**5.** Anordnung nach Anspruch 3 oder 4, **dadurch gekennzeichnet, daß** über den metallischen Rohren (6) eine Hülle (14,16) aus Kunststoff angeordnet ist.

**6.** Anordnung nach Anspruch 3 oder 4, **dadurch gekennzeichnet, daß** über den metallischen Rohren (6) ein elektrisch wirksamer Schirm (17) angebracht ist.

**7.** Anordnung nach Anspruch 6, **dadurch gekennzeichnet, daß** über dem Schirm (17) eine Hülle (18) aus Kunststoff angeordnet ist.
